# EUROPÄISCHE PATENTSCHRIFT

(11) **EP 2 500 172 B1**
(45) Veröffentlichungstag und Bekanntmachung des Hinweises auf die Patenterteilung: **08.04.2015**
(21) Anmeldenummer: 12001374.3
(22) Anmeldetag: 29.02.2012
(51) Int. Cl.: B32B 38/06, B29C 70/02

(54) **Verfahren zur Herstellung eines Flächenbauteils**
Method for producing a panel
Procédé de fabrication d'un composant plat

(30) Priorität: 16.03.2011 DE 102011014151
(43) Veröffentlichungstag der Anmeldung: 19.09.2012
(73) Patentinhaber: Bürstner GmbH, 77694 Kehl (DE)
(72) Erfinder: Frick, Thomas, D-77652 Offenburg (DE)
(74) Vertreter: Laufhütte, Dieter

(56) Entgegenhaltungen:
- DE-U1-202007 005 781
- US-A- 3 446 685
- US-A- 3 471 354
- US-A1- 2003 124 314
- US-A1- 2003 168 763

## Beschreibung

Die Erfindung betrifft ein Verfahren zur Herstellung eines Flächenbauteils.

Gattungsgemäße Verfahren sind aus dem Stand der Technik bekannt. Beispielsweise offenbart die US 2003/0168763 A1 ein Verfahren zur Herstellung einer geschäumten Kunststoffplatte aus einem plattenförmigen Rohling aus einem schäumbaren Kunststoffmaterial.

Der Einsatz von Flächenbauteilen in Wohnwägen oder Wohnmobilen, beispielsweise als Bodenplatte, als Seitenteil, oder als Bestandteil von Einrichtungsgegenständen ist bekannt.

Dabei sind gewisse Anforderungen an die mechanischen Eigenschaften und die Bearbeitbarkeit der Flächenbauteile gestellt. Beispielweise sollen die Flächenbauteile eine gewisse Stabilität, Haltbarkeit, mechanische Dauerbelastbarkeit, Temperaturbeständigkeit im Anwendungsbereich, und Witterungs- und Korrosionsbeständigkeit aufweisen. Ferner sollen die Flächenbauteile beispielsweise für die Bearbeitung mittels Fräsen, Bohren, Schneiden, und diversen Fügetechniken zugänglich sein. Vorteilhaft ist es, wenn die Flächenbauteile am Band herstellbar sind.

Letztlich spielen auch optische Eigenschaften wie die Oberflächengüte, die Farbgebung oder die Dekor- und Designfreiheit, und die Nachhaltigkeit, zum Beispiel die Recyclingfähigkeit und die dauerhafte Verfügbarkeit der Ausgangsmaterialien eine Rolle.

Eine Aufgabe der Erfindung ist es, ein Verfahren zur Herstellung gattungsgemäßer Flächenbauteile mit einem geringeren Gewicht bereitzustellen, wobei die Herstellungskosten vorzugsweise stabil bleiben und insbesondere gesenkt werden, und die obengenannten Rahmenbedingungen vorzugsweise hinreichend eingehalten und insbesondere verbessert werden.

Diese Aufgabe wird erfindungsgemäß mit einem Verfahren gemäß Anspruch 1 gelöst. Vorteilhafte Ausgestaltungen ergeben sich aus den Unteransprüchen.

Mit einem erfindungsgemäßen Verfahren ist ein Flächenbauteil herstellbar, welches wenigstens abschnittsweise wenigstens drei sandwichartig geschichtete Lagen aufweist. Dabei soll eine Mittelage beidseitig von einer Deckschicht bedeckt sein. Wenigstens eine und vorzugsweise beide Oberflächen der Mittelage weisen wenigstens abschnittsweise eine Oberflächenstruktur auf.

Unter einem Flächenbauteil wird im Rahmen der Erfindung beispielsweise eine Platte, beziehungsweise ein ebenes, flächiges Bauteil aus einem vorzugsweise steifen Material verstanden.

In einer Ausführungsform handelt es sich um eine wenigstens dreischichtige Sandwichplatte, vorzugsweise um eine Sandwichhybridplatte. Unter einer Sandwichhybridplatte ist im Rahmen der Erfindung eine wenigstens dreischichtige Sandwichplatte zu verstehen, deren Mittelschicht sich wenigstens in der Materialwahl und vorzugsweise zusätzlich in der Stärke und Struktur von den Deckschichten unterscheidet.

In einer Ausführungsform deckt sich der Bereich der Mittelschicht, der eine Oberflächenstruktur aufweist mit dem Bereich der Mitteschicht, welcher auf der jeweiligen Seite mit einer Deckschicht überzogen ist.

In einer Ausführungsform erstrecken sich alle Lagen des Flächenbauteils und/oder die Oberflächenstruktur der Mittellage über das gesamte Flächenbauteil.

In einer Ausführungsform beträgt die Gesamtstärke des Flächenbauteils zwischen etwa 10 und etwa 100 mm, vorzugsweise zwischen etwa 30 und etwa 60 mm.

In einer Ausführungsform weist die Oberflächenstruktur ein vorzugsweise flächendeckend verbundenes Netz an Vertiefungen, beispielsweise Rillen beziehungsweise Kanäle auf, oder besteht daraus. Dies steht im Gegensatz zu erhabenen Strukturen, wie Rippen und dergleichen. In einer Ausführungsform ist die strukturierte Oberfläche zu mindestens 60% und vorzugsweise zu mindestens 70% eine planare Fläche, die Vertiefungen aufweist, die weniger als 40% und vorzugsweise weniger als 30% der planaren Oberfläche einnehmen.

In einer Ausführungsform weist die Oberflächenstruktur eine zweidimensionale Struktur aus sich kreuzenden beziehungsweise überkreuzenden Vertiefungen, beispielsweise Rillen beziehungsweise Kanäle auf, oder besteht daraus. Die Rillen können gerade oder geschwungen sein und/oder sich senkrecht oder schräg kreuzen. Die Rillen können Richtungsanteile in x- und y- Richtung der Oberfläche des Mittelteils aufweisen. Beispielsweise können senkrechte Vertiefungen ein quadratisches, rechteckiges, rhomboedrisches, wabenartiges, oder ähnliches Muster ausbilden.

Die Vertiefungen können in einer Ausführungsform einen eckigen (beispielsweise dreieckigen) oder runden (beispielsweise halbkreisförmigen) Querschnitt aufweisen. Sie können in einer Ausführungsform zwischen etwa 0,5 und etwa 5 mm, vorzugsweise zwischen etwa 1 und etwa 2 mm tief sein.

In einer Ausführungsform ist die Struktur über den gesamten strukturierten Bereich gleichmäßig ausgeführt. In einer anderen Ausführungsform ist die Oberflächenstruktur über den strukturierten Bereich inhomogen ausgebildet.

Die Struktur ermöglicht es, ein vergleichsweise billiges Standardmaterial mit vorzugsweise geringer Dichte als Mittellage einzusetzen, und dennoch vorteilhafte Eigenschaften im Endprodukt zu erzielen. Daraus kann sich ein strategischer Kostenvorteil ergeben.

In einer Ausführungsform kann die Mittellage durch deren Strukturierung nicht nur die klassischen Aufgaben einer Sandwichmittellage wie Isolation oder SchubDruck-Übertragung zwischen den zugfesten Deckschichten übernehmen, sondern auch ein oder mehrere weitere Funktionen.

Beispielsweise kann die Strukturierung eine Voraussetzung für das Aushärten eines aushärtbaren Matrixmaterials einer Deckschicht wie z.B. ein getriebenes Schaumsystem direkt an der Mittellage sein, da die Struktur für eine stabile Entlüftung von Luft oder auch Treibmitteln beim Aushärten sorgen kann. So kann die Strukturierung die Durchführung eines ordinären und einstufigen Chargenpressganges ermöglichen, da keine Entlüftungsschritte notwendig werden. Es kann ein größerer Spielraum bei der Wahl der Deckschicht und der Beschichtungsmethode eingeräumt werden.

Alternativ oder zusätzlich kann die Strukturierung die Haftung der Deckschicht begünstigen und/oder die mechanischen Eigenschaften der Decklage beeinflussen. Durch die größtenteils ebene Oberfläche wird trotz der Fähigkeit zum Entlüften von Luft oder auch Treibmitteln eine große Auflagefläche für die Deckschicht erreicht, was die Trittfestigkeit begünstigt und einem Verbeulen beziehungsweise Brechen der Deckschichte entgegentritt.

Alternativ oder zusätzlich kann die Strukturierung eine Verteilung von die Struktur aufgetragenem Matrixmaterial über die Oberfläche begünstigen, indem das Harz in die Vertiefungen eindringt, und/oder für eine Verteilung des Harzes und zum Ausgleich von Unstetigkeiten in der Stärke der Mittelschicht sorgen. Die Vertiefungen können als Fließkanäle dienen.

In einer Ausführungsform kann die Strukturierung der Mittellage gezielt dazu eingesetzt werden, Beispielsweise können je nach Struktur Verrippungen und/oder systematische Anschraubpunkte kreiert werden. Beispielsweise kann eine Gitterstruktur bei der Beanspruchung des fertigen Flächenbauteils diesem eine zusätzliche Festigkeit verleihen.

Die strukturierte Mittellage kann dabei als eine verlorene Form, eine formgebende Mittellage betrachtet werden.

In einer Ausführungsform können in die Vertiefungen zusätzlich Strukturelemente wie beispielsweise Gitterroste und dergleichen eingebracht sein. Dies kann die Festigkeit des Flächenbauteils begünstigen.

Die Mittellage ist aus einem Polymerschaum gefertigt, vorzugsweise einem Polymerschaum auf Polystyrolbasis. Solche Werkstoffe haben typischerweise den Vorteil eines niedrigen Raumgewichtes und einer guten Isolationswirkung.

Als Polymerschaum eignen sich vorzugsweise hartelastische und/oder thermoplastische oder duroplastische Polymerschäume, insbesondere Hartschäume. Beispiele umfassen Polymerschäume aufweisend oder bestehend aus Polystyrol (PS), Polyvinylchlorid (PVC), Polyethylenterephtalat (PET) und Polyuretan (PUR). Besonders bevorzugt sind Kunststoffschäume auf PS-Basis, wie beispielsweise XPS (Styrodur) oder EPS (Styropor). Bei den eingesetzten Polymerschäumen handelt es sich um standardisierte Isolationsware. Da letztere typischerweise billig und am Markt frei verfügbar ist, kann sich durch deren Veredelung (Strukturierung) ein strategischer Kostenvorteil ergeben.

Die Mittellage ist starr.

In einer Ausführungsform ist das Flächenbauteil eine Sandwichplatte mit einem Waben- oder Schaumkern.

Das Raumgewicht der Mittellage kann in einer Ausführungsform zwischen etwa 30 und etwa 70 kg/m³ betragen. Die Stärke der Mittellage kann in einer Ausführungsform zwischen etwa 10 und etwa 70mm, vorzugsweise zwischen etwa 30 und etwa 55 mm betragen.

In einer Ausführungsform bestehen eine und vorzugsweise beide Deckschichten aus einem faserverstärkten Werkstoff, vorzugsweise aus einem faserverstärkten Kunststoff. Der faserverstärkte Werkstoff kann auch als Faserverbundwerkstoff oder als faserverstärktes Composit bezeichnet werden.

In einer Ausführungsform umfasst die Faserverstärkung eine Glasfaserverstärkung und/oder eine Carbonfaserverstärkung und/oder eine Aramidfaserverstärkung oder besteht daraus. Hybridfaserverstärkungen umfassen wenigstens zwei Fasern vorzugsweise ausgewählt aus der Gruppe Glasfaser, Carbonfaser und Aramidfaser sind ebenfalls umfasst. Besonders bevorzugt ist der Einsatz einer Glasfaserverstärkung beziehungsweise der Einsatz von Textilglas als Faserverstärkung.

In einer Ausführungsform besteht eine und vorzugsweise beide Deckschichten aus einem glasfaserverstärkten Kunststoff (GFK).

In einer Ausführungsform macht die Faserverstärkung der Deckschichten zwischen etwa 5 Gew.-% und etwa 50 Gew.-%, und vorzugsweise zwischen etwa 20 Gew.-% und etwa 40 Gew.-% des Gesamtgewichts der Deckschichten aus.

Geeignete Faserstrukturen der Faserverstärkung umfassen eindimensionale oder zweidimensionale Strukturen. Diese können in der Ebene des Flächenbauteils gerichtete oder isotrop ausgerichtete Fasern oder Faserverbände aufweisen. Geeignete eindimensionale Strukturen umfassen unidirektionale Gelege aus Rovings oder Bändern. Geeignete zweidimensionale Strukturen umfassen textile Strukturen aus Rovings oder Bändern, wie beispielsweise Gelege, Vliese, Gestricke, Matten (Schnittmatten, Endlosmatten) oder Gewebe. Geeignete Gewebe bestehen gegebenenfalls aus ortogonalen Fadensystemen. Geeignete Gelege können mehrere Faserlagen umfassen, die in verschiedene Richtungen aufeinander abgelegt und mit denen Haltefäden in Z-Richtung miteinander vernäht sind. Geeignete Gewebe umfassen Leinwandgewebe, Köpergewebe oder Atlasgewebe. Diffuse Faserverstärkungen können beispielsweise mit Hilfe des Langfaserinjektionsverfahrens (LFI) hergestellt werden.

Die Art dieser Decklage stellt in einer Ausführungsform ein wichtiges Element dar. Mögliche Funktionen der so ausgebildeten Decklage umfassen die Verklebung mit der Mittellage ohne zusätzlichen Klebstoff, die Verklebung beziehungsweise Verankerung mit gegebenenfalls in die Decklage eingefassten oder auf die Decklage aufgelegten Zusatzbauteilen ohne zusätzlichen Klebstoff, und/oder den Ausgleich von Dickentoleranzen der Mittellage.

Zwei auf unterschiedlichen Seiten der Mittellage befindliche Decklagen des Sandwichbauteils können in einer Ausführungsform eine unterschiedliche Stärke aufweisen und/oder aus unterschiedlichen Materialien gefertigt sein. Beispielsweise kann eine Decklage aus einem faserverstärkten Kunststoff, und die andere Decklage aus einem nicht faserverstärkten Kunststoff gefertigt sein. Eine Decklage kann beispielsweise nur eine Dekorlage darstellen.

In einer Ausführungsform umfasst das Matrixmaterial des faserverstärkten Werkstoffes einen vorzugsweise starren Polymerschaum, insbesondere einen härteelastischen Hartschaum, oder besteht daraus. Das Matrixmaterial kann eine zellige Struktur, beispielsweise eine offenzellige, gemischtzellige oder geschlossenzellige Struktur, vorzugsweise eine homogene und geschlossenzellige Struktur aufweisen. Geeignete Polymerschäume umfassen insbesondere duroplastische Polymerschäume aus Polyurethan, Polyepoxid oder Polyester. Besonders bevorzugt ist ein Polymerschaum auf Polyurethanbasis. In einer Ausführungsform weist das Matrixmaterial ein Raumgewicht von zwischen etwa 100 und etwa 1000 kg/m³, vorzugsweise von zwischen etwa 120 und etwa 300 kg/m³ auf.

In einer Ausführungsform umfasst das Flächenbauteil ferner Zusatzbauteile, welche in die Deckschicht eingefasst sind und/oder adhäsiv und/oder mechanisch darauf verklebt und/oder verkeilt sind. Geeignete Zusatzbauteile umfassen beispielsweise Rahmen, Holzeinleger oder Streckmetalle. Weitere geeignete Zusatzbauteile umfassen Dekorelemente und Überzüge wie eine Bodenheizungsfolie, ein PVC-Belag oder Dekorfolien. Andere geeignete Zusatzbauteile umfassen Bauelemente oder Verbindungselemente wie beispielsweise Schienen, Muttern oder Nippel.

In einer Ausführungsform handelt es sich bei den Flächenbauteilen um ein Bauteil für einen Caravan, beziehungsweise einen Wohnwagen und/oder ein Wohnmobil. Denkbar ist dabei der Einsatz als Bodenplatte, als Wandungsplatte beziehungsweise Seitenteil, oder auch als Bestandteil eines Einrichtungsgegenstandes. Besonders bevorzugt ist der Einsatz als Bodenplatte. Durch den Einsatz eines derartigen Bauteils können in einer Ausführungsform eine signifikante Gewichtsreduktion des Caravans und/oder ein strategischer Kostenvorteil erreicht werden.

Erfindungsgemäß ist ein Verfahren zur Herstellung eines Flächenbauteils vorgesehen, welches die folgenden Schritte umfasst:
a) das Bereitstellen einer aus einem Polymerschaum bestehenden und starren Mittellage;
b) wenigstens abschnittsweises Strukturieren wenigstens einer und vorzugsweise beider Oberflächen der Mittellage;
c) Auftragen eines faserverstärkten Werkstoffes auf die strukturierte Mittellage und/oder Unterlegen der strukturierten Mittellage mit einem faserverstärkten Werkstoff; und
d) Verbinden der Mittellage mit dem faserverstärkten Werkstoff und/oder Aushärten des faserverstärkten Werkstoffes.

Die Reihenfolge der Schritte (a) bis (d) ist notwendigerweise bis zu dem Grad einzuhalten, dass der faserverstärkte Werkstoff auf die strukturierte Oberfläche aufgetragen wird. Es ist jedoch denkbar und von der Erfindung umfasst, dass zwei Abfolgen (b)→(c)→(d) - je eine Abfolge für jede Deckschicht - hintereinandergeschaltet werden. Ebenso ist eine Abfolge (b)→(c)→(d)→(c)→(d) denkbar. Dies entspricht einem abwechselnden Auftragen beziehungsweise Unterlegen der Mittellage mit dem faserverstärkten Werkstoff. Was die übrigen Schritte betrifft, ist, abgesehen von der genannten Reihenfolge, jede denkbare Reihenfolge von der Erfindung umfasst.

In einer Ausführungsform umfasst das Strukturieren gemäß Schritt (b) das Heißprägen wenigstens einer und vorzugsweise beider Oberflächen der Mittellage. Alternativ oder zusätzlich kann das Strukturieren Fräsen und/oder Schneiden einer Struktur in die Oberfläche umfassen. Die Strukturierung beider Oberflächen kann gleichzeitig oder sequentiell erfolgen. Besonders bevorzugt ist das Heißprägen mit Hilfe eines Kalanders.

In einer Ausführungsform umfasst das Strukturieren gemäß Schritt (b) die Fertigung einer Oberflächenstruktur wie sie im Zusammenhang mit der Diskussion des Flächenbauteils beschrieben wurde.

In einer Ausführungsform umfasst das Auftragen eines faserverstärkten Werkstoffes auf die strukturierte Mittellage gemäß Schritt (c) das Auflegen eines textilen Faserhalbzeugs auf die strukturierte Mittellage und dessen Imprägnieren mit einem aushärtbaren Matrixmaterial.

In einer Ausführungsform umfasst das Unterlegen der strukturierten Mittellage mit einem faserverstärktem Werkstoff gemäß Schritt (c) das Auflegen eines textilen Faserhalbzeugs auf eine Unterlage, dessen Imprägnieren mit einem aushärtbaren Matrixmaterial, und das anschließende Auflegen der strukturierten Mittellage. Die Unterlage gehört dabei nicht zum Flächenbauteil. Es kann sich beispielsweise um einen Sprühtisch oder dergleichen handeln.

In einer Ausführungsform umfasst das Unterlegen und/oder Auftragen gemäß Schritt (c) das Auflegen und/oder Unterlegen eines vorimprägnierten Faserhalbzeugs, wie beispielsweise eines Prepregs.

In einer Ausführungsform umfasst Schritt (c) das Auftragen von aushärtbarem Matrixmaterial auf die Unterlage oder Mittellage vor Auflegen des textilen und gegebenenfalls vorimprägnierten Faserhalbzeugs.

In einer Ausführungsform umfasst Schritt (c) das Besprühen der Mittellage im Härtespritzverfahren, insbesondere im Langfaserinjektionsverfahren. Dabei kann über einen Spritzkopf aushärtbares Matrixmaterial mit darin dispergierten, zerschnittenen Verstärkungsfasern aufgetragen werden. Gegebenenfalls kann die so aufgetragene Lage vor dem Aushärten separat verdichtet und entlüftet werden.

Geeignete textile Faserhalbzeuge umfassen Glasfaserhalbzeuge, Carbonfaserhalbzeuge, Aramidfaserhalbzeuge oder Hybridfaserhalbzeuge umfassend wenigstens zwei Fasern, vorzugsweise ausgewählt aus der Gruppe Glasfaser, Carbonfaser und Aramidfaser. Bevorzugt sind Glasfaserhalbzeuge wie Textilglas.

Geeignete Halbzeuge umfassen eindimensionale oder zweidimensionale Halbzeuge. Diese können in der Ebene des Flächenbauteils gerichtete oder isotrop ausgerichtete Fasern oder Faserverbände aufweisen. Geeignete eindimensionale Halbzeuge umfassen unidirektionale Gelege aus Rovings oder Bändern. Geeignete zweidimensionale Halbzeuge umfassen textile Strukturen aus Rovings oder Bändern, wie beispielsweise Gelege, Vliese, Gestricke, Matten (Schnittmatten, Endlosmatten) oder Gewebe. Geeignete Gewebe bestehen gegebenenfalls aus ortogonalen Fadensystemen. Geeignete Gelege können mehrere Faserlagen umfassen, die in verschiedene Richtungen aufeinander abgelegt und mit denen Haltefäden in Z-Richtung miteinander vernäht sind. Geeignete Gewebe umfassen Leinwandgewebe, Köpergewebe oder Atlasgewebe.

In einer Ausführungsform umfasst das aushärtbare Matrixmaterial ein aushärtendes und/oder schäumendes Polymersystem beziehungsweise Harz, oder besteht daraus. Geeignete aushärtbare Polymersysteme umfassen Einkomponentensysteme, Zweikomponentensysteme oder Mehrkomponentensysteme. Polyurethansysteme, Epoxidsysteme oder Polyestersysteme sind geeignet. In einer Ausführungsform handelt es sich um ein härtendes, ungesättigtes Polyesterharz. Bevorzugt ist ein Zweikomponenten (2-K) Polyurethansystem. Polymersysteme, welche zu duroplastischen Kunststoffen, vorzugsweise zu einem ausgehärteten Matrixmaterial des faserverstärkten Werkstoffes, wie dieser im Zusammenhang mit dem Flächenbauteil diskutiert wurde, aushärten, sind besonders bevorzugt.

Sollte es sich um ein Mehrkomponentensystem handeln, so kann die vorgelagerte, das heißt vor der Imprägnierung der Faserhalbzeuge durchzuführende Durchmischung der einzelnen Komponenten in einer Hochdruckmischanlage erfolgen.

Geeignete Imprägnierungsverfahren für das Faserhalbzeug umfassen das Autoklavieren, das Spritzgießen, das Laminieren, das Filmbeschichten, das Harzinjizieren, das Besprühen, und dergleichen. Besonders bevorzugt ist das Besprühen des aufgelegten, trockenen oder vorimprägnierten Faserhalbzeuges. Das Besprühen kann in einer Ausführungsform durch Führung eines Sprühkopfes in der Ebene (in x- und y-Richtung) der Mittellage beziehungsweise der Flächenbauteile geführt werden. Beispielsweise umfasst die Bewegung des Sprühkopfes eine Linearbewegung mit Überführungsgeschwindigkeiten von zwischen etwa 1 und etwa 2 m/s. In einer Ausführungsform werden ein, zwei oder weniger als fünf Besprühungsvorgänge zum Imprägnieren der Halbzeuge verwendet.

In einer Ausführungsform umfasst das Verbinden und Aushärten gemäß Schritt (d) ein adhäsives Verbinden der entstehenden beziehungsweise aushärtenden Deckschicht mit der Mittellage. So kann eine Verbindung zwischen Deckschicht und Mittellage allein durch das Aushärten der Matrix erfolgen.

In einer Ausführungsform umfasst das Verbinden und Aushärten gemäß Schritt (d) das Verpressen des vorzugsweise noch nicht ausgehärteten faserverstärkten Werkstoffs mit der Mittellage. Geeignete Presszeiten umfassen beispielsweise zwischen etwa 10 und etwa 30 Minuten, vorzugsweise zwischen etwa 15 und etwa 25 Minuten. Geeignete Presstemperaturen umfassen beispielsweise den Bereich von zwischen etwa 40°C und etwa 100°C, vorzugsweise zwischen etwa 50°C und etwa 80°C.

In einer Ausführungsform können Schritte (c) und (d) einander entsprechen oder nahtlos ineinander übergehen, da bei einem Auftragen eines aushärtbaren Matrixmaterials die Verbindung bereits einsetzt eine keine klare Grenze gezogen werden kann.

Wenn ein schäumendes Polymermaterial als aushärtbares Matrixmaterial verwendet wird, kann dieses Material eine Startzeit von beispielsweise zwischen etwa 30 Sekunden und etwa 5 Minuten, vorzugsweise zwischen etwa 2 Minuten und etwa 4 Minuten aufweisen. Ferner kann es eine offene Zeit beziehungsweise Steigzeit von zwischen etwa 2 Minuten und etwa 15 Minuten, vorzugsweise von zwischen etwa 5 und etwa 10 Minuten aufweisen. Die Zeiten sind letztendlich auf den Fertigungsprozess abzustimmen.

In einer Ausführungsform umfasst das Verfahren ferner das Belegen der Mittelschicht mit Zusatzbauteil und/oder das Einfassen von Zusatzbauteilen in den nicht ausgehärteten faserverstärkten Werkstoff und/oder das Auflegen von Zusatzbauteilen auf den nicht ausgehärteten faserverstärkten Werkstoff. Geeignete Zusatzbauteile wurden in Zusammenhang mit dem Flächenbauteil diskutiert. Durch das Aushärten beziehungsweise Pressen des faserverstärkten Werkstoffes können die so an das Flächenbauteil beziehungsweise dessen Rohling assoziierten Zusatzbauteile in einer Ausführungsform irreversibel in die Deckschicht einfasst und/oder adhäsiv und/oder mechanisch darauf beziehungsweise darin verklebt werden.

Erfindungsgemäß hergestellte Flächenbauteile können in einem Caravan, beziehungsweise Wohnwagen oder Wohnmobil eingesetzt werden, vorzugsweise als Bodenplatte, als Wandungsplatte beziehungsweise Seitenteil, oder als Bestandteil eines Einrichtungsgegenstandes.

Weitere Einzelheiten und Vorteile der Erfindung ergeben sich aus den nachfolgend beschriebenen Figuren und Ausführungsbeispielen. In den Figuren zeigen:
- Figur 1:: die Oberflächenstruktur der Mittellage einer Ausführungsform eines mittels eines erfindungsgemäßen Verfahrens hergestellten Flächenbauteils, und
- Figur 2:: die Oberflächenstruktur der Mittellage einer anderen Ausführungsform eines mittels eines erfindungsgemäßen Verfahrens hergestellten Flächenbauteils.

### Beispiel 1:

Dieses Beispiel beschreibt die Herstellung einer Sandwichhybridplatte in einem Pressenzyklus, wobei feste Faserverbunddecklagen entstehen, in die gegebenenfalls auch Strukturteile, Verbindungselemente und Dekordecklagen mit eingeklebt werden können. Das Verfahren ermöglicht eine integrierte Herstellung einer GFK-Platte im Zuge der Herstellung einer Sandwichplatte, was durch eine spezielle Strukturierung der Mittellage ermöglicht wird. Der Herstellungsprozess umfasst die folgenden Schritte in gegebener Abfolge:
a) Vorfertigung der Mittellage durch Strukturieren der Mittellage und Auflegen von Textilglas und gegebenenfalls Zusatzbauteilen einer oberen Decklage;
b) Auflegen von Textilglas und gegebenenfalls Zusatzbauteilen einer unteren Decklage auf einem Sprühtisch;
c) Harzauftrag auf die untere Decklage;
d) Auflegen der vorgefertigten Mittellage;
e) Harzauftrag auf die obere Decklage;
f) gegebenenfalls, Auflegen von weiteren Schichten wie einer Bodenheizungsfolie oder Überzügen wie einem PVC-Belag; und
g) Pressen.

Schritte (c) bis (g) umfassen den eigentlichen Pressprozess. Deren Ablauf ist miteinander verkettet beziehungsweise durch die Steigzeit und Presszeit bestimmt.

Abschließend kann ein Entformen und/oder ein mehrseitiger Beschnitt und/oder ein Fräsen erfolgen.

Schritt (a) des Vorfertigens der Mittellage umfasst das Bereitstellen einer kostengünstigen PS-Polymerschaumplatte (Isolationsware) mit zwischen 10 und 100 mm Stärke und zwischen 30 bis 70 kg/m³ Raumgewicht.

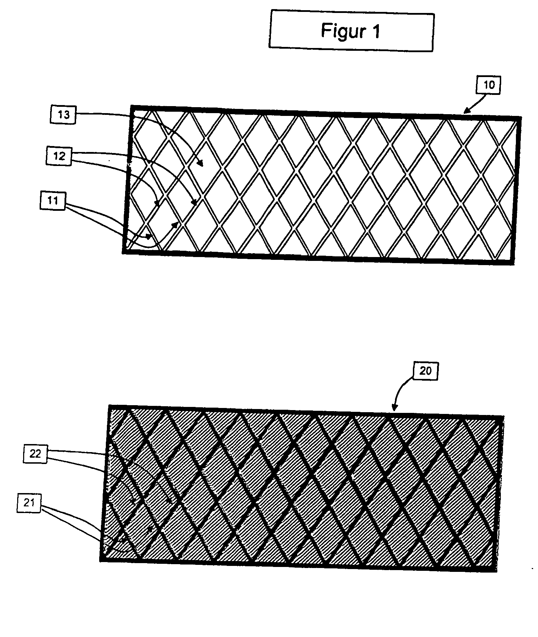

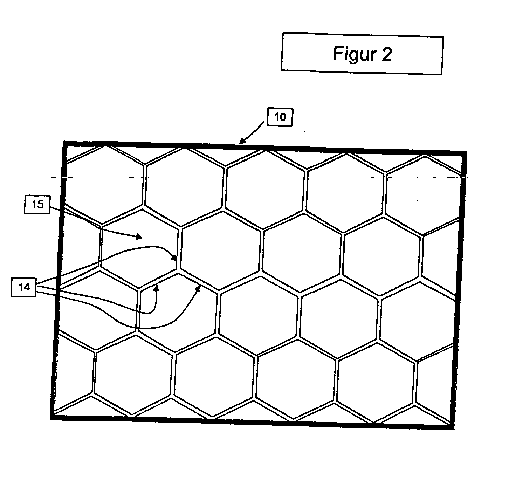

Diese Mittellage wird in einem Kalender beidseitig heißgeprägt und so mit einer Oberflächenstruktur versehen. Mögliche Oberflächenstrukturen sind in Figuren 1 und 2 gezeigt.

In Figur 1 ist mit Bezugszeichen 10 die Mittellage gekennzeichnet, und mit Bezugszeichen 20 eine korrespondierende Decklage.

Die Mittellage 10 weist auf der dem Betrachter zugewandten Oberfläche eine rautenförmige Struktur auf, die aus parallelen Gruppen 11 und 12 von linearen Vertiefungen gebildet ist. Die linearen Vertiefungen der unterschiedlichen Gruppen 11 beziehungsweise 12 stehen gewinkelt aufeinander und erstrecken sich durchgehend über die gesamte Oberfläche, sodass durchgehende Luftkanäle beziehungsweise Fließkanäle in zwei Richtungen x und y gebildet werden. Die Vertiefungen sind im Querschnitt rechtwinklig und weisen eine Tiefe von beispielsweise zwischen etwa 1 und etwa 2 mm sowie eine Breite von beispielsweise zwischen etwa 0,5 und etwa 1 mm auf. Die Rauten haben Abmessungen von beispielsweise etwa 15 mm von Spitze zu Spitze auf der längeren Achse und etwa 6 bis etwa 7 mm von Spitze zu Spitze auf der kürzeren Achse.

Der Großteil der Oberfläche ist jedoch planar (siehe Rauten 13) und kann in direkten Kontakt mit einer Deckschicht treten. So wird eine große Auflagefläche gebildet, welche die Stärke einer adhäsiven Verbindung und die mechanische Belastbarkeit einer Deckschicht begünstigt.

Die Decklage 20 weist das Abbild der Oberfläche der Mittellage auf, in diesem Fall eine rautenförmige Struktur aus erhabenen Stegen 21 und 22.

In Figur 2 ist mit Bezugszeichen 10 eine Mittellage gekennzeichnet, deren dem Betrachter zugewandte Oberfläche eine wabenförmige Struktur aufweist, die von einem sich durchgehend über die gesamte Oberfläche erstreckenden Netzwerk aus linearen Vertiefungen 14 mit endlicher Länge gebildet wird. So werden Luftkanäle beziehungsweise Fließkanäle in zwei Richtungen x und y gebildet. Die Vertiefungen können wie im Zusammenhang mit Figur 1 erläutert ausgebildet sein.

Wie in der Struktur gemäß Figur 1 ist der Großteil der Oberfläche planar (siehe Sechsecke 15) und kann in direkten Kontakt mit einer Deckschicht treten. So wird eine große Auflagefläche gebildet, welche die Stärke einer adhäsiven Verbindung und die mechanische Belastbarkeit einer Deckschicht begünstigt.

Auf das Heißprägen folgt ein Belegen der Mittellage mit Textilglas und gegebenenfalls Zusatzbauteilen wie einem Rahmen, Holzeinlegern und Streckmetallen. Diese Elemente entsprechen der oberen Decklage.

Bei dem in Schritten (a) und (b) verwendeten Textilglas handelt es sich um ein standardisiertes und kostengünstiges Produkt. Die Auswahl spezieller Textilgläser erfolgt anwendungsspezifisch. Beispielsweise können Textilgläser mit durchgehenden Fasern ohne Überlappungen wie Endlosgelege, Gewebe und Rovings gemäß den Kraftlinien verlegt werden. Alternativ oder zusätzlich können Gelege mit isotroper Faserausrichtung wie Schnittmatten oder Gelege, beziehungsweise mit LFI-Verfahren hergestellte Deckschichten aufgetragen werden.

Das in Schritt (c) eingesetzte Harz ist ein schäumbares PU-System. Die Harzauftragung erfolgt durch Besprühen mit Hilfe der Airless-Sprühtechnik. Die Führung des Sprühkopfes erfolgt in x- und y-Richtung auf vorzugsweise linearen Bahnen. Der Härtungsprozess ist mit einer gedämpften Reaktion verbunden, sodass der Schaumkern nicht thermisch geschädigt wird. Das Harzsystem hat eine Startzeit von zwischen 1 und 5 Minuten und eine Steigzeit von zwischen 5 und 10 Minuten.

Schritt (f) umfasst eine Presszeit von zwischen 10 und 30 Minuten bei einer Presstemperatur von zwischen 60 und 80°C.

### Beispiel 2:

Eine konkrete Parametrisierung des in Beispiel 1 beschriebenen Herstellungsprozesseses zur Herstellung einer Bodenplatte für einen Caravan ist im Folgenden beschrieben:
Eine kostengünstige XPS-Dämmplatte mit einem Raumgewicht von etwa 50 kg/m³ und 50 mm Stärke wird bereitgestellt. Es folgt die Behandlung in einem Verfahren mit Schritten (a) bis (g) gemäß Beispiel 1.

Dies umfasst eine beidseitige Strukturierung (Heißprägung) die mittels Kalander hergestellt wurde. Der Kalander weist temperierte Walzen auf. Für ein Erhitzen der Platten wird ein IR-Strahler verwendet. Die Platten werden der Heißprägeapparatur zugeführt und die Struktur wird durch die Kalanderwalze geprägt. Die Stärke der Mittelschicht nach der Heißprägung ist definiert, wodurch in diesem Arbeitsschritt auch die Dickenkalibrierung der Mittellage erfolgt.

Eine Glasfaserendlosmatte sowie mehrere Holzeinleger werden auf die strukturierte Mittelplatte und einen Sprühtisch gelegt.

Ein schäumbares 2-K PU-System wird in einer Hochdruckmischanlage bereitgestellt und mit einer Airless-Sprühanlage Dosiereinlage auf den Sprühtisch und die Mittelplatte abgegeben. Das 2-K PU-System hat eine Startzeit von etwa 3 Minuten und eine Steigzeit von etwa 8 Minuten. Der Sprühkopf ist y-Richtung an mehreren Punkten und in z-Richtung an zwei Punkten positionierfähig, wobei die zwei Punkte in z-Richtung den Positionen für die Besprühung der unteren Decklage und der oberen Decklage entsprachen. In x-Richtung erfolgt eine schnelle Linearbewegung mit einer Geschwindigkeit von etwa 1,5 m/s bei schneller Beschleunigung. Die Steuerung der Bewegung sowie die An- und Abschaltung des Mischkopfes erfolgt automatisch und koordinatengesteuert. Auf das Besprühen folgt eine Punktabsaugung am Harzauftrag.

Die Fertigungsvorrichtung umfasst ferner Abrollvorrichtungen für Deckschichten, mit deren Hilfe eine Bodenheizungsplatte und ein PVC-Belag einseitig auf die nicht ausgehärtete Deckschicht aufgelegt werden. Der PVC-Belag weist keinen oder einen abgestimmten Schaumrücken auf, sodass dessen rückseitige Struktur beim Aushärten des 2-K PU-Systems adhäsiv und mechanisch mit der Deckschicht verklebt. Durch die mechanische Verkrallung ist die Haftung unabhängig von etwaigen oberflächenwirksamen Zusatzstoffen aus der PVC-Herstellung.

Die Presszeit beträgt etwa 20 Minuten bei einer Temperatur von etwa 60°C.

Das 2-K PU-System härtet zu einem hartelastischen Hartschaum mit einer Raumdichte von etwa 150 kg/m³ bis 1000 kg/m³ und einer homogenen, geschlossenen Zellstruktur aus. Der Gewichtsanteil an Glasfasern am Gesamtgewicht der Deckschicht beträgt etwa 30% bis 50%.

Die resultierende Bodenplatte hat belastungsresistente Eigenschaften bei Dauerschwingbelastungen. Bei einem Dauerversuch im Labor mit 150 kg Belastung und 200.000 Zyklen zeigt sich eine hervorragende Beständigkeit.

Zusammenfassend ergibt sich, dass durch ein erfindungsgemäßes Herstellungsverfahren eine hohe Wirtschaftlichkeit bei gleichzeitiger Gewichtsreduktion und Erfüllung der weiteren Anforderungen an gattungsgemäße Bauteile durch die Nutzung von Synergien erreicht werden kann. Diese umfassen insbesondere die Veredelung durch Strukturierung von kostengünstigen Mittelschichten, die Auswahl des richtigen Matrixwerkstoffes für die Deckschichten und den Einsatz der richtigen Auftragungstechnik.

## Patentansprüche

1. Verfahren zur Herstellung eines Flächenbauteils umfassend
(a) das Bereitstellen einer aus einem Polymerschaum bestehenden und starren Mittellage, wobei es sich bei dem Polymerschaum um standardisierte Isolationsware handelt,
b) wenigstens abschnittsweises Strukturieren wenigstens einer und vorzugsweise beider Oberflächen der Mittellage,
c) Auftragen eines faserverstärkten Werkstoffs auf die strukturierte Mittellage und/oder Unterlegen der strukturierten Mittellage mit einem faserverstärkten Werkstoff, und
d) Verbinden der Mittellage mit dem faserverstärkten Werkstoff und/oder Aushärten des faserverstärkten Werkstoffes.

2. Verfahren gemäß Anspruch 1, **dadurch gekennzeichnet, dass** das Strukturieren gemäß Schritt (b) das Heißimprägnieren der Oberfläche der Mittellage umfasst.

3. Verfahren gemäß einem der vorhergehenden Ansprüche, **dadurch gekennzeichnet, dass** das Strukturieren gemäß Schritt (b) die Fertigung einer Oberflächenstruktur umfasst, die ein vorzugsweise flächendeckend verbundenes Netz an Vertiefungen und/oder Rillen und vorzugsweise eine zweidimensionale Struktur aus sich kreuzenden Rillen aufweist.

4. Verfahren gemäß einem der vorhergehenden Ansprüche, **dadurch gekennzeichnet, dass** das Auftragen gemäß Schritt c) das Auflegen eines textilen Faserhalbzeugs auf die strukturierte Mittellage und das Imprägnieren mit einem aushärtbaren Matrixmaterial umfasst und/oder das Unterlagen gemäß Schritt c) das Auflegen eines textilen Faserhalbzeugs auf eine Unterlage, das Imprägnieren des textilen Faserhalbzeugs mit einem aushärtbaren Matrixmaterial, und das anschließende Auflegen der strukturierten Mittellage umfasst.

5. Verfahren gemäß einem der vorhergehenden Ansprüche, **dadurch gekennzeichnet, dass** das Verbinden gemäß Schritt d) ein adhäsives Verbinden durch das Aushärten eines aushärtbaren Matrixmaterials des faserverstärkten Werkstoffs und/oder ein Verpressen des vorzugsweise noch nicht ausgehärteten faserverstärkten Werkstoffs mit der Mittellage umfasst.

6. Verfahren gemäß einem der vorhergehenden Ansprüche, **dadurch gekennzeichnet, dass** das Verfahren ferner das Belegen der Mittelschicht mit Zusatzbauteilen und/oder das Einfassen von Zusatzbauteilen in den nicht ausgehärteten faserverstärkten Werkstoff und/oder das Auflegen von Zusatzbauteilen auf den nicht ausgehärteten faserverstärkten Werkstoff umfasst.

7. Verfahren gemäß einem der vorhergehenden Ansprüche, **dadurch gekennzeichnet, dass** das Flächenbauteil wenigstens abschnittsweise wenigstens drei sandwichartig geschichtete Lagen aufweist, wobei eine aus einem Polymerschaum bestehende und starre Mittellage beidseitig von einer Deckschicht aus einem faserverstärkten Werkstoff bedeckt ist, und wobei wenigstens eine und vorzugsweise beide Oberflächen der Mittellage wenigstens abschnittsweise eine Oberflächenstruktur aufweisen.

8. Verfahren gemäß Anspruch 7, **dadurch gekennzeichnet, dass** die Oberflächenstruktur ein vorzugsweise flächendeckend verbundenes Netz an Vertiefungen aufweist oder daraus besteht.

9. Verfahren gemäß Anspruch 7 oder 8, **dadurch gekennzeichnet, dass** die Oberflächenstruktur Rillen und vorzugsweise eine Struktur aus sich kreuzenden Rillen aufweist oder daraus besteht.

10. Verfahren gemäß einem der Ansprüche 7 bis 9, **dadurch gekennzeichnet, dass** die Mittellage aus einem Polymerschaum auf Polystyrolbasis besteht.

11. Verfahren gemäß einem der Ansprüche 7 bis 10, **dadurch gekennzeichnet, dass** wenigstens eine und vorzugsweise beide Deckschichten aus einem glasfaserverstärkten Kunststoff bestehen.

12. Verfahren gemäß Anspruch 11, **dadurch gekennzeichnet, dass** das Matrixmaterial des faserverstärkten Werkstoffes einen Polymerschaum, vorzugsweise einen Polymerschaum auf Polyurethanbasis umfasst.

13. Verfahren gemäß einem der Ansprüche 7 bis 12, **dadurch gekennzeichnet, dass** Zusatzbauteile in wenigstens eine Deckschicht eingefasst sind und/oder adhäsiv und/oder mechanisch darauf verklebt und/oder verkrallt sind.

14. Verfahren gemäß einem der Ansprüche 7 bis 13, **dadurch gekennzeichnet, dass** es sich um ein Bauteil, vorzugsweise eine Bodenplatte, eine Wandungsplatte beziehungsweise ein Seitenteil, oder ein Bestandteil eines Einrichtungsgegenstandes für einen Wohnwagen oder ein Wohnmobil handelt.

## Claims

1. A method of manufacturing a panel comprising
(a) providing a rigid middle layer comprising a polymer foam, wherein the polymer foam is a standardised insulation product;
b) at least sectionally structuring at least one surface, and preferably both surfaces of the middle layer;
c) applying a fibre-reinforced material to the structured middle layer and/or underlaying the structured middle layer with a fibre-reinforced material; and
d) connecting the middle layer to the fibre-reinforced material and/or hardening the fibre-reinforced material.

2. A method in accordance with claim 1, **characterised in that** the structuring in accordance with step (b) comprises the hot impregnation of the surface of the middle layer.

3. A method in accordance with one of the preceding claims, **characterised in that** the structuring in accordance with step (b) comprises the production of a surface structure which has a preferably completely connected network of recesses and/or grooves and which preferably has a two-dimensional structure of intersecting grooves.

4. A method in accordance with one of the preceding claims, **characterised in that** the applying in accordance with step c) comprises the laying of a textile semi-finished fibre product onto the structured middle layer and the impregnating with a hardenable matrix material; and/or **in that** the underlaying in accordance with step c) comprises the laying of a textile semi-finished fibre product onto an underlay, the impregnating of the textile semi-finished fibre product with a hardenable matrix material and the subsequent laying on of the structured middle layer.

5. A method in accordance with one of the preceding claims, **characterised in that** the connecting in accordance with step d) comprises an adhesive connecting by the hardening of a hardenable matrix material of the fibre-reinforced material and/or by a pressing of the preferably not yet hardened fibre-reinforced material with the middle layer.

6. A method in accordance with one of the preceding claims, **characterised in that** the method furthermore comprises the mounting of the middle layer with additional components and/or the enclosure of additional components into the not yet hardened fibre-reinforced material and/or the placing of additional components onto the unhardened fibre-reinforced material.

7. A method in accordance with one of the preceding claims, **characterised in that** the panel has at least sectionally at least three layers layered in the manner of a sandwich, with a rigid middle layer comprising a polymer foam being covered by a top layer of a fibre-reinforced material on both sides, and with at least one surface, and preferably both surfaces, of the middle layer having a surface structure at least sectionally.

8. A method in accordance with claim 7, **characterised in that** the surface structure comprises or is composed of a preferably completely connected network of recesses.

9. A method in accordance with claim 7 or claim 8, **characterised in that** the surface structure comprises or is composed of grooves and preferably a structure of intersecting grooves.

10. A method in accordance with one of the claims 7 to 9, **characterised in that** the middle layer comprises a polymer foam based on polystyrene.

11. A method in accordance with one of the claims 7 to 10, **characterised in that** at least one top layer, and preferably both top layers, comprise a fibreglass reinforced plastic.

12. A method in accordance with claim 11, **characterised in that** the matrix material of the fibre-reinforced material comprises a polymer foam, preferably a polymer foam based on polyurethane.

13. A method in accordance with one of the claims 7 to 12, **characterised in that** additional components are enclosed into at least a top layer and/or are adhesively and/or mechanically bonded thereto and/or are pinched into the same.

14. A method in accordance with one of the claims 7 to 13, **characterised in that** it is a component, preferably a base plate, a wall plate or a side part, or a component of a furnishing article for a caravan or a mobile home.

## Revendications

1. Procédé de fabrication d'un composant plat comprenant
(a) la mise à disposition d'une couche médiane rigide composée d'une mousse polymère, la mousse polymère étant un produit isolant normalisé,
b) la structuration au moins sur certaines parties d'au moins une et de préférence des deux surfaces de la couche médiane,
c) l'application d'une matière renforcée par des fibres sur la couche médiane structurée et/ou le placement sous la couche médiane structurée d'une matière renforcée par des fibres, et
d) la liaison de la couche médiane et de la matière renforcée par des fibres et/ou le durcissement de la matière renforcée par des fibres.

2. Procédé selon la revendication 1, **caractérisé en ce que** la structuration selon l'étape (b) comprend l'imprégnation à chaud de la surface de la couche médiane.

3. Procédé selon l'une des revendications précédentes, **caractérisé en ce que** la structuration selon l'étape (b) comprend la production d'une structure superficielle qui comporte un réseau de préférence complètement interconnecté d'enfoncements et/ou de stries et de préférence une structure bidimensionnelle constituée de stries qui s'entrecoupent.

4. Procédé selon l'une des revendications précédentes, **caractérisé en ce que** l'application selon l'étape c) comprend la pose d'un produit semi-fini textile à base de fibres sur la couche médiane structurée et l'imprégnation avec un matériau de matrice durcissable et/ou le placement sous la couche médiane selon l'étape c) comprend la pose d'un produit semi-fini textile à base de fibres sur un support, l'imprégnation du produit semi-fini textile à base de fibres avec un matériau de matrice durcissable, et la pose subséquente de la couche médiane structurée.

5. Procédé selon l'une des revendications précédentes, **caractérisé en ce que** la liaison selon l'étape d) comprend une liaison adhésive de la matière renforcée par des fibres par le durcissement d'un matériau de matrice durcissable et/ou une compression de la matière renforcée par des fibres de préférence pas encore durcie avec la couche médiane.

6. Procédé selon l'une des revendications précédentes, **caractérisé en ce que** le procédé comprend en outre la garniture de la couche médiane avec des composants supplémentaires et/ou l'insertion de composants supplémentaires dans la matière renforcée par des fibres non durcie et/ou la pose de composants supplémentaires sur la matière renforcée par des fibres non durcie.

7. Procédé selon l'une des revendications précédentes, **caractérisé en ce que** le composant plat comporte au moins sur certaines parties au moins trois couches stratifiées en sandwich, une couche médiane rigide et composée d'une mousse polymère étant recouverte des deux côtés par une couche de recouvrement en une matière renforcée par des fibres, et au moins une et de préférence les deux surfaces de la couche médiane comportant au moins sur certaines parties une structure superficielle.

8. Procédé selon la revendication 7, **caractérisé en ce que** la structure superficielle comporte ou est composée d'un réseau de préférence complètement interconnecté d'enfoncements.

9. Procédé selon la revendication 7 ou 8, **caractérisé en ce que** la structure superficielle comporte ou est composée de stries et de préférence d'une structure constituée de stries qui s'entrecoupent.

10. Procédé selon l'une des revendications 7 à 9, **caractérisé en ce que** la couche médiane est composée d'une mousse polymère à base de polystyrène.

11. Procédé selon l'une des revendications 7 à 10, **caractérisé en ce qu'**au moins une et de préférence les deux couches de recouvrement se composent d'une matière plastique renforcée de fibres de verre.

12. Procédé selon la revendication 11, **caractérisé en ce que** le matériau de matrice de la matière renforcée par des fibres comporte une mousse polymère, de préférence une mousse polymère à base de polyuréthane.

13. Procédé selon l'une des revendications 7 à 12, **caractérisé en ce que** des composants supplémentaires sont insérés dans au moins une couche de recouvrement et/ou sont collés et/ou ancrés sur celle-ci par adhésion et/ou de manière mécanique.

14. Procédé selon l'une des revendications 7 à 13, **caractérisé en ce qu'**il s'agit d'un composant, de préférence une plaque de plancher, une plaque de paroi ou une partie latérale, ou d'un élément constitutif d'un objet d'aménagement pour une caravane ou un camping-car.
